# EUROPEAN PATENT SPECIFICATION

(11) **EP 3 525 520 B1**
(45) Date of publication and mention of the grant of the patent: **26.05.2021**
(21) Application number: 17860112.6
(22) Date of filing: 30.06.2017
(51) Int. Cl.: H04W 48/12, H04W 24/04, H04W 36/12, H04W 48/18

(54) **METHOD AND TERMINAL FOR NETWORK SWITCHING**
VERFAHREN UND ENDGERÄT ZUR NETZWERKUMSCHALTUNG
PROCÉDÉ ET TERMINAL POUR UNE COMMUTATION DE RÉSEAU

(30) Priority: 13.10.2016 CN 201610895165; 25.04.2017 CN 201710278555
(43) Date of publication of application: 14.08.2019
(73) Proprietor: Huawei Technologies Co., Ltd., Longgang District Shenzhen, Guangdong 518129 (CN)
(72) Inventor: JIANG, Yinqing, Shenzhen Guangdong 518129 (CN); TANG, Chao, Shenzhen Guangdong 518129 (CN); LIU, Xiaojian, Shenzhen Guangdong 518129 (CN); RUAN, Pan, Shenzhen Guangdong 518129 (CN)
(74) Representative: Thun, Clemens
(86) International application number: PCT/CN2017/091169
(87) International publication number: WO 2018/068536

(56) References cited:
- CN-A- 103 024 801
- CN-A- 105 282 802
- IN-A- 1992 CH2 013
- US-A1- 2015 304 162
- US-A1- 2016 295 432
- SAMSUNG: "Corrections to cell status and cell reservations", 3GPP DRAFT; R2-132768_MOCN_CR , vol. RAN WG2 9 August 2013 (2013-08-09), pages 1-2, XP050718302, Barcelona, Spain Retrieved from the Internet: URL:http://www.3gpp.org/ftp/tsg_ran/WG2_RL 2/TSGR2_83/Docs/ [retrieved on 2013-08-09]
- SAMSUNG: 'Cell Status and Cell Reservations in MOCN Configuration' 3GPP TSG-RAN WG2 #83 R2-132774 23 August 2012, XP050718303

## Description

### TECHNICAL FIELD

Embodiments of the present invention relate to the field of communications technologies, and in particular, to a network switching method and a terminal.

### BACKGROUND

With continuous development of communications technologies, high coverage is always a target of a mobile communications network. A multi-operator core network (Multi-Operator Core Network, MOCN) can implement that a plurality of operators share an access network, so as to reduce communications network deployment difficulties.

In the MOCN, an eNodeB broadcasts, in a system message 1 (System Information Block Type 1, SIB 1), a public land mobile network (Public Land Mobile Network, PLMN) list to which a current cell belongs. In the PLMN list, the first one is a primary PLMN, and others are secondary PLMNs. Use of a base station resource by the primary/secondary PLMN may be assured according to a configured proportion, and a primary operator does not have a privilege for the use of the base station resource. After UE is powered on, PLMN selection is performed according to descriptions in 3GPP 23122 section 4.4. If the SIB 1 has a PLMN with which the UE needs to register, the UE indicates the selected PLMN to the eNodeB. The eNodeB selects an S1 interface according to the PLMN selected by the UE and connects to a core network node of the PLMN.

When some disasters occur, the S1 interface between the core network and the eNodeB is disconnected. The eNodeB sends system message change paging (paging) to the UE after detecting that the S1 interface is disconnected. In the system information block type 1, the faulty network is deleted, and the UE is expected to register with another network.

Generally, when network switching is performed, after it is determined that a network is out of service, all standards such as LTE/UMTS/GSM in the PLMN need to be traversed to implement successful switching. Switching efficiency is low. For details, refer to 3GPP 36304.

Prior art document IN 1992 CHE 2013 refers to a method of managing mobility and access in a multiple operator core network environment.

Further, US 2016/295432 A1 refers to a method and an apparatus for processing a fault in a multi-operator core network. The method is applied to a first base station, where multiple operators share a network within coverage of the first base station, and the method includes: acquiring an identifier of a faulty operator, where the faulty operator is an operator whose network is faulty within coverage of the first base station; and notifying UE served by the first base station of the identifier of the faulty operator by using a specified message, so that the UE served by the first base station no longer accesses the network of the faulty operator within coverage of the first base station.

Further, the prior art document 3GPP Draft R2-132768, 09. August 2013 refers to corrections to cell status and cell reservation.

### SUMMARY

Embodiments of this application provide a network switching method and a terminal, to resolve a problem that switching efficiency is low when network switching is performed.

This problem is solved by the subject matter of the independent claims. Further implementation forms are provided in the dependent claims.

According to a first aspect, an embodiment of this application provides a network switching method, including: receiving, by a terminal, a system message sent by a network device, where the system message includes information about at least two public land mobile networks PLMNs, each piece of the information about the at least two PLMNs includes a status of a corresponding PLMN, the at least two PLMNs belong to a multi-operator core network MOCN, and one of the at least two PLMNs is a currently registered PLMN of the terminal; and when determining according to a status of the currently registered PLMN that the currently registered PLMN is unavailable, selecting, by the terminal according to the information about the at least two PLMNs, a PLMN whose status is available from the at least two PLMNs except the currently registered PLMN to perform registration. According to the embodiments of this application, when a current network is unavailable, the terminal directly selects a PLMN according to a PLMN list in the system message and performs registration. Current network searching does not need to be performed in a switching process, and therefore switching efficiency is higher.
In an optional implementation, the system message includes a system message 1, the system message 1 includes identification information of the PLMN, and the identification information of the PLMN includes a PLMN ID and a parameter corresponding to cellReservedForOperatorUse. The status of the PLMN includes the parameter corresponding to a cell reservation status cellReservedForOperatorUse in the identification information of the PLMN The determining, by the terminal according to a status of the currently registered PLMN, that the currently registered PLMN is unavailable includes: when determining that a parameter corresponding to cellReservedForOperatorUse of the currently registered PLMN is "reserved", determining, by the terminal, that the currently registered PLMN is unavailable. The PLMN whose status is available includes a PLMN, in the at least two PLMNs, in which a parameter corresponding to cellReservedForOperatorUse is "not reserved".

According to the embodiments of this application, whether the current PLMN is available may be determined according to the parameter corresponding to cellReservedForOperatorUse, and therefore efficiency is higher.

According to a second aspect, an embodiment of this application provides a terminal, including: a receiver, configured to receive a system message sent by a network device, where the system message includes information about at least two public land mobile networks PLMNs, each piece of the information about the at least two PLMNs includes a status of a corresponding PLMN, the at least two PLMNs belong to a multi-operator core network MOCN, and one of the at least two PLMNs is a currently registered PLMN of the terminal; and a processor, configured to: when determining according to a status of the currently registered PLMN that the currently registered PLMN is unavailable, select, by the terminal according to the information about the at least two PLMNs, a PLMN whose status is available from the at least two PLMNs except the currently registered PLMN to perform registration.

In an optional implementation, the system message includes a system message 1, and the status of the PLMN includes a parameter corresponding to a cell reservation status cellReservedForOperatorUse of the PLMN. The processor is further configured to: when determining that a parameter corresponding to cellReservedForOperatorUse of the currently registered PLMN is "reserved", determine that the currently registered PLMN is unavailable. The PLMN whose status is available includes a PLMN, in the at least two PLMNs, in which a parameter corresponding to cellReservedForOperatorUse is "not reserved".

According to a third aspect, an embodiment of this application provides a computer readable storage medium, including an instruction, where when the instruction is run on a computer, the computer performs the method according to the first aspect and the optional implementation thereof.

According to a fourth aspect, an embodiment of this application provides a computer program product, including an instruction, where when the instruction is run on a computer, the computer performs the method according to the first aspect and the optional implementation thereof.

### BRIEF DESCRIPTION OF DRAWINGS

FIG. 1 is an architectural diagram of an MOCN to which a network switching method is applicable according to an embodiment of this application;
FIG. 2 is a schematic flowchart of a network switching method;
FIG. 3 is a signaling exchange diagram of a network switching method according to an embodiment of this application;
FIG. 4 is a network architectural diagram;
FIG. 5 is a signaling exchange diagram of another network switching method according to an embodiment of this application;
FIG. 6 shows an example of a system message 1 according to an embodiment of this application; and
FIG. 7 is a schematic structural diagram of a terminal according to an embodiment of this application.

### DESCRIPTION OF EMBODIMENTS

Embodiments of this application provide a network switching method and a terminal, and may be applied to an MOCN-based network switching process. Specifically, when a current network is unavailable, the terminal directly selects a PLMN according to a PLMN list in a system message and performs registration. Current network searching does not need to be performed in the switching process, and therefore switching efficiency is higher, and user experience is better.

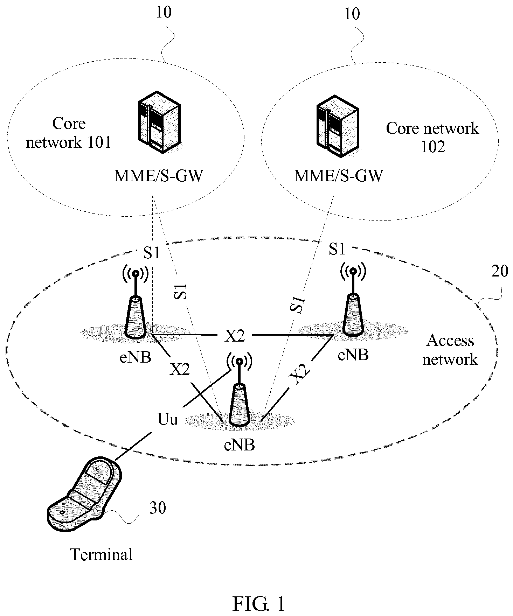

FIG. 1 is an architectural diagram of an MOCN to which a network switching method is applicable according to an embodiment of this application. As shown in FIG. 1, the MOCN network includes at least two core networks 10, an access network 20, and a terminal 30, and the core networks 10 and the access network 20 are connected by using an S1 interface. The at least two core networks 10 include a core network 101 and a core network 102 and belong to different operators. Networks of the different operators may be distinguished by using a PLMN identity. For example, a network of an operator A corresponding to the core network 101 may use an identity of a PLMN 1, and a network of an operator B corresponding to the core network 102 may use an identity of a PLMN 2.

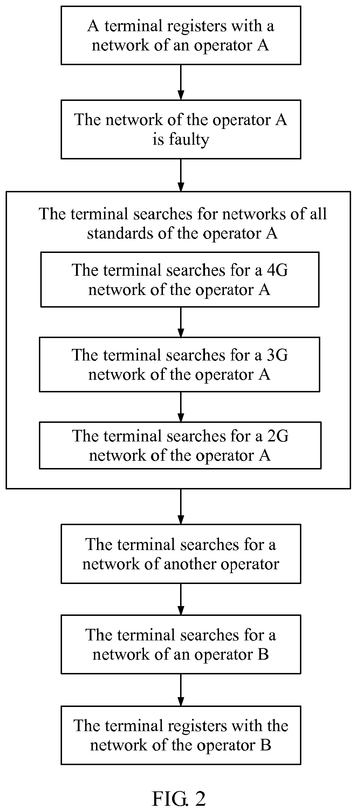

As shown in FIG. 2, if the terminal registers with the network of the operator A, when the network of the operator A is faulty, the terminal first searches for networks of all standards of the operator A. For example, the terminal first searches for a 4G network of the operator A, then searches for a 3G network of the operator A after the 4G network of the operator A is out of service, and then searches for a 2G network after the 3G network of the operator A is out of service. The terminal starts to search for networks of other operators after searching for the networks of all the standards of the operator A and discovering that all the networks are out of service. Not all these other networks have a protocol relationship with the network of the operator A, that is, not all the networks allow the terminal to perform registration. When finding a network that is of the operator B and that allows the terminal to perform registration, the terminal registers with the network of a specific standard of the operator B.

It is discovered through analysis in this embodiment of this application that networks of different standards of a same operator usually provide different services. Generally, if a network of one standard of an operator is damaged, a network of another standard is also affected, and a service is also problematic. Therefore, when the terminal selects the network of the another standard for registration, registration is usually unsuccessful; although registration is successful, quality of service is decreased, and user experience is affected.

This embodiment of this application provides a network switching method and a terminal. If the terminal 30 registers with the core network 101 of the network of the network operator A, when the core network 101 is faulty, and the access network 20 and the core network 101 cannot perform normal communication, the access network 20 sends a system message 1 to the terminal 30. The system message 1 carries a PLMN list and an indication that a network corresponding to the PLMN 1 is unavailable (that is, indicating that the core network 101 of the network corresponding to the PLMN 1 is out of service). When determining, according to the system message 1, that the network corresponding to the currently registered PLMN 1 is unavailable, the terminal 30 selects, according to the PLMN list, an available PLMN (for example, a network corresponding to the PLMN 2) for registration. According to this embodiment of this application, when the current network is unavailable, according to the PLMN list, a PLMN is selected for registration. Current network searching does not need to be performed in a switching process, and therefore switching efficiency is higher.

The terminal 30 may include various devices having a wireless communication function, such as an handheld device, an in-vehicle device, a wearable device, a computing device, another processing device connected to a wireless modem, or user equipment (User Equipment, UE) in various forms, including a mobile station (Mobile station, MS), a terminal (terminal), terminal equipment (Terminal Equipment), and the like.

The access network 20 includes an access network device. The access network device may be an apparatus deployed in a radio access network and used to provide a wireless communication function for the terminal. The apparatus may include a macro base station, a micro base station, a relay node, an access point, and the like in various forms. In systems that use different radio access technologies, devices with a base station function may have different names. For example, in an LTE network, a device with the base station function is referred to as an evolved NodeB (evolved NodeB, eNB or eNodeB), and in a 3rd generation 3G network, the device is referred to as a NodeB (Node B), or the like. For ease of description, in this application, the foregoing apparatus that provides the wireless communication function for the terminal is collectively referred to as the access network device.

The core network 10 includes a core network device. Different PLMNs may be corresponding to different core network devices. The core network device may be a device that provides user connection, user management, service bearing that provides, as a bearer network, an interface to an external network. Establishment of the user connection includes functions such as mobility management (Mobile Management, MM), call management (CM), exchanging/routing, and recorded announcement (establishing a connection relationship with a peripheral device of an intelligent network in combination with an intelligent network service). The user management includes user descriptions, QoS (Quality of Service, quality of service), a user communication record (Accounting), a virtual home environment provided by using a dialogue with an intelligent network platform, or security (a corresponding security measure provided by an authentication center includes security management for a mobile service and security processing for external network access). Bearer connection (Access to) includes external PSTN, an external circuit data network and a packet data network, Internet (Internet) and Intranets, an SMS server of a mobile operator, or the like. A basic service that can be provided by the core network may include mobile office, e-commerce, communication, an entertainment service, a travel and location-based service, a telemetry service (Telemetry), a simple message transfer service (monitoring and control), or the like, such as an MME (Mobility Management Entity, mobility management entity) or an SGW (Serving GateWay, serving gateway) in the LTE network. For ease of description, in this application, the foregoing device that provides user connection, user management, service bearing that provides, as the bearer network, an interface to the external network is collectively referred to as the core network device.

The clock synchronization method and device according to the embodiments of the present invention are described in detail below with reference to the accompanying drawings and by using specific embodiments and application scenarios thereof.

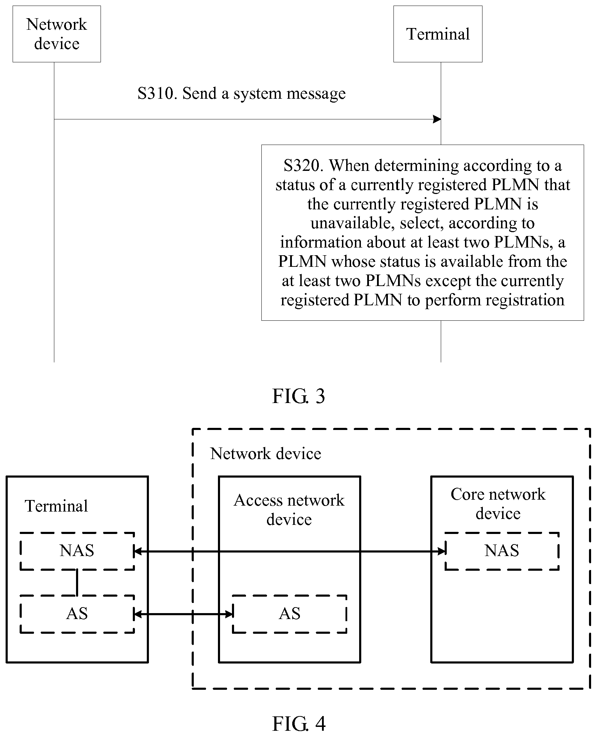

FIG. 3 is a signaling exchange diagram of a network switching method according to an embodiment of this application. As shown in FIG. 2, the method specifically includes the following steps.

S310. A network device sends a system message. The system message includes information about at least two PLMNs, each piece of the information about the at least two PLMNs includes a status of a corresponding PLMN, the at least two PLMNs belong to an MOCN, and one of the at least two PLMNs is a currently registered PLMN of a terminal. For example, the system message includes a PLMN list, the PLMN list includes at least information about two PLMNs, and the information about the PLMN includes an identity, a status, or the like of the PLMN. The PLMN list includes information about the currently registered PLMN of the terminal, and the information about the currently registered PLMN of the terminal indicates that the currently registered PLMN is unavailable.

The network device may send, by using an SIB 1, a PLMN list to which a current cell belongs. For details of the SIB 1, refer to 3GPP TS 36.331.

The PLMN list includes a PLMN identity (PLMN-Identity, PLMN ID) and a cell reservation status (cellReservedForOperatorUse). When a parameter corresponding to cellReservedForOperatorUse is "not reserved", the PLMN is available; when the parameter corresponding to cellReservedForOperatorUse is "reserved", the PLMN is unavailable. The PLMN ID includes a country code (Mobile Country Code, MCC) and a network code (Mobile Network Code, MNC) of a home network of a local SIM card. The MCC and the MNC usually match a prefix of an international mobile subscriber identity (International Mobile Subscriber Identification Number, IMSI) of the local SIM card.

The network device may include an access network device and a core network device. When determining that the access network device and the core network device cannot perform normal communication, the access network device may change a parameter corresponding to cellReservedForOperatorUse of a PLMN corresponding to the core network device into "reserved" in the SIB 1, and send an acknowledged SIB 1 to the terminal. For example, when the access network device detects that an S1 interface between the access network device and the core network device is disconnected, or when the access network device receives an indication that a network is unavailable and that is sent by the core network device, it is determined that the access network device and the core network device cannot perform normal communication.

The terminal receives the system message sent by the network device. Specifically, the network device may send a paging message to the terminal, and the paging message is used to indicate a change in the system message. The terminal receives the SIB 1 after receiving the paging message.

S320. When determining according to a status of a currently registered PLMN that the currently registered PLMN is unavailable, the terminal selects, according to information about at least two PLMNs, a PLMN whose status is available from the at least two PLMNs except the currently registered PLMN to perform registration.

The terminal determines, according to the parameter corresponding to cellReservedForOperatorUse in the system message, whether the current network is available or unavailable.

When it is determined that the current PLMN is unavailable, current network searching is no longer performed. PLMN selection is performed according to the PLMN list carried in the system message. The RPLMN is no longer selected for registration, and another available PLMN in the LMN list is searched for to perform registration. When registration succeeds, a serving state is entered.

In addition, the terminal may further maintain a blacklist. When determining that the current PLMN is unavailable and performing PLMN selection, the terminal matches a selected PLMN against the blacklist. If the PLMN is in the blacklist, the terminal does not camp on the PLMN and starts a PLMN reselection operation. The blacklist may be determined according to content in the system message.

According to this embodiment of this application, when an operator network in MOCN networking is broken down, cell searching and PLMN selection processes are optimized, and searching for all standards of LTE (4G)/UMTS (3G)/GSM (2G) of the RPLMN is omitted, so that approximately 60s of time consumption can be reduced. Quick switching to another available network in a shared network can reduce a searching time for the original broken-down network. In addition, the MOCN network is actually used to resolve a problem of incomplete coverage of the operator network. If networks of a plurality of operators belong to the MOCN, generally, the plurality of operators have a cooperation relationship, and even the plurality of operators may set each other as an EPLMN (equivalent PLMN). If a network of one standard of the plurality of operators is damaged, a network of another standard is also affected, and a service is also problematic. Therefore, quick switching to a network of another operator, especially to a network of an operator as an EPLMN, can improve communication experience of a user. For example, an operator A and an operator B are of the MOCN. If any network (4G, 3G, or 2G) of the operator A is faulty, the terminal may directly search for a 4G network (the terminal usually sets 4G as a preferred network) of the operator B, so as to obtain a normal service in a quickest manner.

FIG. 4 is a network architectural diagram. As shown in FIG. 4, a terminal interacts with an access network device in a network device by using an access stratum (AS) protocol. The terminal interacts with a core network device in the network device by using a non-access stratum (NAS) protocol. The access stratum protocol is a lower-level protocol of the non-access stratum protocol.

The network switching method in the embodiments of this application is further described below with reference to the network architecture shown in FIG. 4.

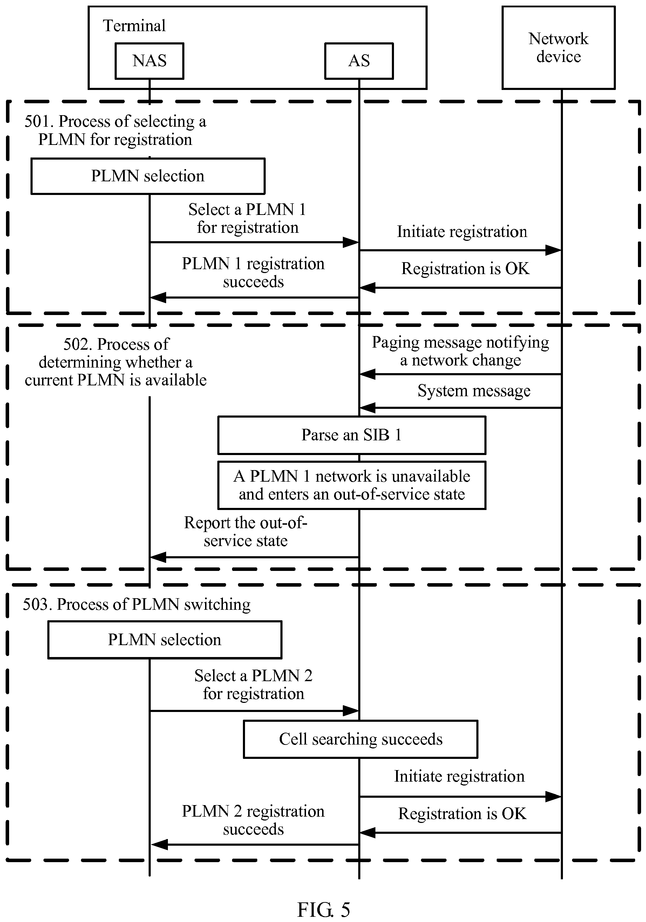

FIG. 5 is a signaling exchange diagram of another network switching method according to an embodiment of this application. The method is applicable to the terminal shown in FIG. 3. The method specifically includes the following steps.

501. The terminal selects a PLMN for registration.

After powered on, the terminal needs to select a PLMN for registration. For this process, refer to related descriptions in 3GPP 23122.

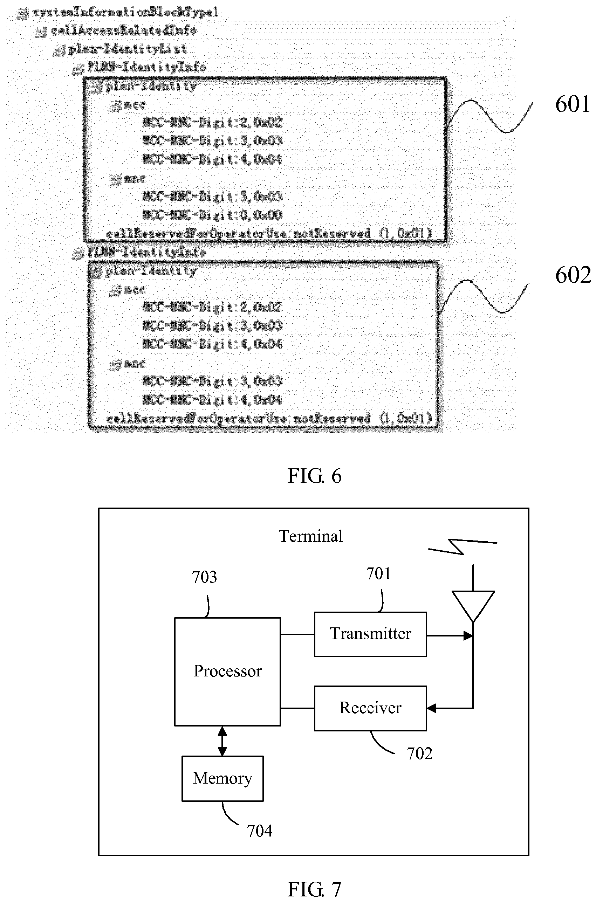

For example, as shown in FIG. 6, after powered on, the terminal needs to register with a network whose PLMN ID is 234-34, that is, a network corresponding to a PLMN ID indicated by a part 602 in a PLMN list shown in FIG. 6 (for example, a PLMN ID corresponding to the core network 101 shown in FIG. 1 may be 234-34). 234 is a mobile country code (mobile country code, MCC), and 34 is a mobile network code (mobile network code, MNC). It may be learned, by reading a system message 1, that a parameter corresponding to cellReservedForOperatorUse of the network whose PLMN ID is 234-34 is "not reserved", that is, registration can be performed, and the terminal registers with the network. The SIB 1 mainly includes a related parameter for broadcasting cell access and cell selection, scheduling information of an SI message, or the like. The system message 1 includes the PLMN list and fields such as cellReservedForOperatorUse.

502. Determine whether a current PLMN of the terminal is available.

When the network device cannot perform normal communication due to a fault or another problem, the network device needs to modify the system message 1 and notify the terminal. Generally, the cellReservedForOperatorUse field in the PLMN ID corresponding to the network is modified to "reserved". Specifically, the network device first sends a paging message to an access stratum of the terminal, and the message is used to indicate that the system message 1 is changed. The AS stratum of the terminal needs to re-parse the system message 1 after receiving the paging message.

The AS stratum of the terminal parses the SIB 1, determines that a parameter corresponding to cellReservedForOperatorUse that is corresponding to a currently registered PLMN 1 (such as the network whose PLMN ID is 234-34 shown in FIG. 6) is "reserved", and determines that the PLMN 1 network is unavailable. The terminal enters an out-of-service state.

The AS stratum of the terminal carries a cause value (that is, the parameter corresponding to cellReservedForOperatorUse of the PLMN 1 is "reserved"), and reports the out-of-service state to a NAS stratum of the terminal.

503. The terminal performs a PLMN switching process.

The NAS stratum of the terminal needs to perform the PLMN switching process after determining that the terminal is in the out-of-service state.

Specifically, the NAS stratum of the terminal performs PLMN selection according to the PLMN list obtained by parsing the system message 1. For example, the PLMN list in the system message 1 shown in FIG. 6 includes two PLMNs: the network whose PLMN ID is 234-34 and a network indicated by a PLMN ID 234-30 (a PLMN ID indicated by a part 601 shown in FIG. 6) (for example, a PLMN ID corresponding to the core network 102 shown in FIG. 1 may be 234-30). Further, the NAS stratum of the terminal performs selection from PLMNs in which a parameter corresponding to cellReservedForOperatorUse is "not reserved" in the PLMN list. For example, as shown in FIG. 6, because the parameter of cellReservedForOperatorUse corresponding to the network whose PLMN ID is 234-34 is modified to "reserved", the network whose PLMN ID is 234-30 is selected for registration.

The NAS stratum of the terminal instructs the AS stratum to perform registration according to a PLMN 2 (such as the network whose PLMN ID is 234-30 in FIG. 6) selected by the NAS stratum of the terminal.

The AS stratum of the terminal performs cell searching, and sends a registration request to a network device corresponding to the PLMN 2 after cell searching succeeds. After the network device returns response information about successful PLMN 2 registration, the terminal enters an in-service state.

In addition, the AS stratum of the terminal may further maintain a blacklist. When determining that the current PLMN is unavailable and performing PLMN selection, the AS stratum of the terminal matches a selected PLMN against the blacklist. If the PLMN is in the blacklist, the terminal does not camp on the PLMN and starts a PLMN reselection operation.

FIG. 7 is a schematic structural diagram of a terminal according to an embodiment of this application. The terminal includes a transmitter 701, a receiver 702, a processor 703, and a memory 704. The transmitter 701, the receiver 702, the processor 703, and the memory 704 may be connected by using a bus (not shown in the figure).

The transmitter 701 is configured to generate an uplink signal. The uplink signal is transmitted to the access network device in the foregoing embodiments by using an antenna. For example, the terminal sends a registration request or the like to a network device. The receiver 702 is configured to adjust (such as filter, amplify, down-convert, or digitalize) a signal received by using the antenna. The signal is usually from the network device. For example, the receiver is configured to receive a paging message, a system message 1, or the like sent by the network device.

The processor 703 controls and manages an action of the terminal, and is configured to perform processing performed by the terminal in the foregoing embodiments. For example, the processor is configured to control a network selection behavior of the terminal according to the received system message and/or another process of the technology described in the present invention. Specifically, the processor 703 may include an AS module and a NAS module. The AS module is configured to: parse the system message 1, determine whether a current PLMN is available, and when the current PLMN is unavailable, report to the NAS module. The NAS module is configured to select, according to a PLMN list in the system message 1, a PLMN whose status is available from the PLMN list except for a currently registered PLMN to perform registration. For example, the processor 703 is configured to support the terminal in performing processes S310 and S320 in FIG. 3 and processes 501, 502, and 503 in FIG. 5. The memory 604 is configured to store program code and data for the terminal.

It may be understood that FIG. 7 shows only a simplified design of the terminal. For example, in actual application, the access network device may include any quantity of transmitters, receivers, processors, controllers, memories, communications units, or the like, and all base stations that can implement the present invention are within the protection scope of the present invention.

The controller/processor configured to perform functions of the terminal or the access network device in the present invention may be a central processing unit (CPU), a general purpose processor, a digital signal processor (DSP), an application-specific integrated circuit (ASIC), a field programmable gate array (FPGA) or another programmable logical device, a transistor logical device, a hardware component, or any combination thereof. The controller/processor may implement or execute various example logical blocks, modules, and circuits described with reference to content disclosed in the present invention. Alternatively, the processor may be a combination of processors implementing a computing function, for example, a combination of one or more microprocessors, or a combination of a DSP and a microprocessor.

A person skilled in the art may be further aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

A person of ordinary skill in the art may understand that all or a part of the steps in each of the foregoing method of the embodiments may be implemented by a program instructing a processor. The foregoing program may be stored in a computer readable storage medium. The storage medium may be a non-transitory (non-transitory) medium, such as a random-access memory, read-only memory, a flash memory, a hard disk, a solid state drive, a magnetic tape (magnetic tape), a floppy disk (floppy disk), an optical disc (optical disc), or any combination thereof.

The foregoing descriptions are merely example implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A network switching method performed by a terminal, the method comprising:
• receiving a System Information Block, SIB, Type 1 message from a network device, wherein the SIB Type 1 message contains a public land mobile network, PLMN, list, the PLMN list comprising information about at least two public land mobile networks, PLMNs, each piece of the information about the at least two PLMNs comprises a status of a corresponding PLMN, the at least two PLMNs belong to a multi-operator core network, MOCN, and one of the at least two PLMNs is a currently registered PLMN of the terminal;
° maintaining a blacklist, which is determined according to content in the SIB Type 1 message; and
• when determining according to a status of the currently registered PLMN that the currently registered PLMN is unavailable (S₃20):
**a.)** selecting, according to the information about the at least two PLMNs, a PLMN whose status is available from the at least two PLMNs except the currently registered PLMN to perform registration;
**b.)** matching the selected PLMN against the blacklist, the blacklist containing PLMNs on which the terminal is not to camp on;
**c.)** if the selected PLMN is contained in the blacklist, returning to step **a.)** for a reselection of another available PLMN;
**d.)** if the selected PLMN is not contained in the blacklist, determining the selected PLMN as the PLMN on which the terminal is to camp on.

2. The method according to claim 1, wherein the status of the PLMN comprises a parameter corresponding to a cell reservation status cellReservedForOperatorUse in identification information of the PLMN.

3. The method according to claim 2, wherein the determining that the currently registered PLMN is unavailable comprises:
when determining that a parameter corresponding to cellReservedForOperatorUse in identification information of the currently registered PLMN is "reserved", determining that the currently registered PLMN is unavailable.

4. The method according to claim 2 or 3, wherein the PLMN whose status is available comprises a PLMN in the at least two PLMNs that has identification information in which a parameter corresponding to cellReservedForOperatorUse is "not reserved".

5. A terminal configured to perform any of the methods according to claims 1 to 4.

6. A computer readable storage medium, comprising an instruction, wherein when the instruction is run on a processor of a terminal according to claim 5, the processor performs the method according to any one of claims 1 to 4.

7. A computer program product, comprising an instruction, wherein when the instruction is run on a a processor of a terminal according to claim 5, the processor performs the method according to any one of claims 1 to 4.

## Patentansprüche

1. Netzwerk-Switching-Verfahren, durchgeführt durch ein Endgerät, wobei das Verfahren Folgendes umfasst:
• Empfangen einer "System Information Block-" bzw. SIB-Typ-1-Nachricht von einem Netzwerkgerät, wobei die SIB-Typ-1-Nachricht eine öffentliche terrestrische Mobilfunknetz- bzw. PLMN-Liste enthält, die PLMN-Liste Informationen über mindestens zwei öffentliche terrestrische Mobilfunknetze, PLMNs, enthält, jedes Stück der Informationen über die mindestens zwei PLMNs einen Status eines entsprechenden PLMN enthält, die mindestens zwei PLMNs zu einem Mehrbetreiber-Kernnetzwerk, MOCN, gehören, und eines der mindestens zwei PLMNs ein gegenwärtig registriertes PLMN des Endgerätes ist;
° Führen einer Sperrliste, die gemäß dem Inhalt in der SIB-Typ-1-Nachricht ermittelt wird;
und
• wenn gemäß einem Status des gegenwärtig registrierten PLMN festgestellt wird, dass das gegenwärtig registrierte PLMN nicht verfügbar ist (S320):
**a.)** Auswählen, gemäß den Informationen über die mindestens zwei PLMNs, eines PLMN, dessen Status verfügbar ist, von den mindestens zwei PLMNs, außer dem gegenwärtig registrierten PLMN, um eine Registrierung durchzuführen;
**b.)** Vergleichen des ausgewählten PLMN mit der Sperrliste, wobei die Sperrliste PLMNs enthält, auf denen das Endgerät nicht lagern soll;
**c.)** falls das ausgewählte PLMN in der Sperrliste enthalten ist, Zurückkehren zu Schritt **a.)** für eine Neuwahl eines anderen verfügbaren PLMN;
**d.)** falls das ausgewählte PLMN nicht in der Sperrliste enthalten ist, Bestimmen des ausgewählten PLMN als das PLMN, auf dem das Endgerät lagern soll.

2. Verfahren gemäß Anspruch 1, wobei der Status des PLMN einen Parameter umfasst, der einem Zellenreservierungsstatus cellReservedForOperatorUse in den Identifikationsinformationen des PLMN entspricht.

3. Verfahren gemäß Anspruch 2, wobei das Bestimmen, dass das gegenwärtig registrierte PLMN nicht verfügbar ist, Folgendes umfasst:
wenn festgestellt wird, dass ein Parameter, der cellReservedForOperatorUse in den Identifikationsinformationen des gegenwärtig registrierten PLMN entspricht, "reserviert" ist, Bestimmen, dass das gegenwärtig registrierte PLMN nicht verfügbar ist.

4. Verfahren gemäß Anspruch 2 oder 3, wobei das PLMN, dessen Status verfügbar ist, ein PLMN in den mindestens zwei PLMNs umfasst, das Identifikationsinformationen aufweist, in denen ein Parameter, der cellReservedForOperatorUse entspricht, "nicht reserviert" ist.

5. Endgerät, das dazu ausgelegt ist, ein beliebiges der Verfahren gemäß den Ansprüchen 1 bis 4 durchzuführen.

6. Computerlesbares Speichermedium, das eine Anweisung enthält, wobei, wenn die Anweisung auf einem Prozessor eines Endgerätes gemäß Anspruch 5 ausgeführt wird, der Prozessor das Verfahren gemäß einem beliebigen der Ansprüche 1 bis 4 durchführt.

7. Computerprogrammprodukt, das eine Anweisung enthält, wobei, wenn die Anweisung auf einem Prozessor eines Endgerätes gemäß Anspruch 5 ausgeführt wird, der Prozessor das Verfahren gemäß einem beliebigen der Ansprüche 1 bis 4 durchführt.

## Revendications

1. Procédé de commutation de réseau réalisé par un terminal, le procédé comprenant les étapes consistant à :
recevoir un message de bloc d'informations de système (SIB) de type 1 en provenance d'un dispositif de réseau, le message SIB de type 1 contenant une liste de réseaux mobiles terrestres publics (PLMN), la liste PLMN comprenant des informations sur au moins deux réseaux mobiles terrestres publics (PLMN), chaque information des informations sur les au moins deux PLMN comprenant un statut d'un PLMN correspondant, les au moins deux PLMN appartenant à un réseau central multi-opérateur (MOCN) et un des au moins deux PLMN étant un PLMN actuellement enregistré du terminal ;
tenir à jour une liste noire, qui est déterminée selon un contenu du message SIB de type 1 ; et
quand il est déterminé, selon un statut du PLMN actuellement enregistré, que le PLMN actuellement enregistré est indisponible (S320) :
a.) sélectionner, selon les informations sur les au moins deux PLMN, un PLMN dont le statut est disponible parmi les au moins deux PLMN, à l'exception du PLMN actuellement enregistré, pour réaliser un enregistrement ;
b.) faire concorder le PLMN sélectionné avec la liste noire, la liste noire contenant des PLMN où le terminal ne doit pas être mis en attente ;
c.) si le PLMN sélectionné est contenu dans la liste noire, retourner à l'étape a.) pour resélectionner un autre PLMN disponible ;
d.) si le PLMN sélectionné n'est pas contenu dans la liste noire, déterminer le PLMN sélectionné comme le PLMN où le terminal doit être mis en attente.

2. Procédé selon la revendication 1, dans lequel le statut du PLMN comprend un paramètre correspondant à un statut de réservation de cellule, cellReservedForOperatorUse, dans une information d'identification du PLMN

3. Procédé selon la revendication 2, dans lequel la détermination du fait que le PLMN actuellement enregistré est indisponible comprend l'étape consistant à :
quand il est déterminé qu'un paramètre correspondant à cellReservedForOperatorUse dans une information d'identification du PLMN actuellement enregistré est « réservé », déterminer que le PLMN actuellement enregistré est indisponible.

4. Procédé selon la revendication 2 ou 3, dans lequel le PLMN dont le statut est disponible comprend un PLMN, parmi les au moins deux PLMN, qui a une information d'identification où un paramètre correspondant à cellReservedForOperatorUse est « non réservé ».

5. Terminal configuré pour réaliser l'un quelconque des procédés selon les revendications 1 à 4.

6. Support de stockage lisible par ordinateur comprenant une instruction, quand l'instruction est exécutée sur un processeur d'un terminal selon la revendication 5, le processeur réalisant le procédé selon l'une quelconque des revendications 1 à 4.

7. Produit de programme informatique comprenant une instruction, quand l'instruction est exécutée sur un processeur d'un terminal selon la revendication 5, le processeur réalisant le procédé selon l'une quelconque des revendications 1 à 4.
